# FASCICULE DE BREVET EUROPEEN

(11) **EP 1 644 219 B1**
(45) Date de publication et mention de la délivrance du brevet: **26.08.2009**
(21) Numéro de dépôt: 04767577.2
(22) Date de dépôt: 05.07.2004
(51) Int. Cl.: B60Q 1/04

(54) **BLOC PROJECTEUR POUR VEHICULE AUTOMOBILE, ET VEHICULE CORRESPPONDANT**
SCHEINWERFEREINHEIT FÜR KRAFTFAHRZEUG UND ENTSPRECHENDES FAHRZEUG
HEADLIGHT BLOCK FOR MOTOR VEHICLE AND CORRESPONDING VEHICLE

(30) Priorité: 15.07.2003 FR 0308609
(43) Date de publication de la demande: 12.04.2006
(73) Titulaire: RENAULT S.A.S., 92100 Boulogne Billancourt (FR)
(72) Inventeur: HORTAL, Stéphane, F-92300 Levallois Perret (FR); QUEVILLY, Eric, F-78370 Plaisir (FR); VAILLANT, Philippe, F-78180 Montigny-Le-Bretonneux (FR)
(86) Numéro de dépôt international: PCT/FR2004/001741
(87) Numéro de publication internationale: WO 2005/007449

(56) Documents cités:
- EP-A- 1 232 932
- EP-A- 1 484 216
- FR-A- 2 481 218
- FR-A- 2 827 251
- FR-A- 2 852 285
- PATENT ABSTRACTS OF JAPAN vol. 1996, no. 07, 31 juillet 1996 (1996-07-31) -& JP 08 058498 A (DAIHATSU MOTOR CO LTD), 5 mars 1996 (1996-03-05)

## Description

L'invention concerne un bloc projecteur comportant un projecteur et un support de projecteur, le véhicule automobile comportant notamment un bouclier. Elle concerne également un véhicule équipé d'un tel bloc projecteur. Le bloc projecteur selon l'invention est notamment destiné à l'avant d'un véhicule.

Plusieurs dispositifs de fixation des projecteurs avant existent actuellement.

Un premier dispositif consiste à fixer sur la traverse avant du véhicule une pièce de forme complexe sur laquelle la partie avant de la face inférieure du projecteur va pouvoir être fixée, la partie arrière du projecteur étant fixée à une structure fixe supérieure du véhicule. Ce dispositif présente toutefois l'inconvénient de nécessiter de nombreux réglages délicats pour une fixation et une orientation correctes des projecteurs. Par ailleurs, le bouclier du véhicule est alors fixé au véhicule par sa partie centrale et ses parties latérales, mais n'est pas soutenu au niveau des projecteurs. Cette absence de soutien peut être gênante pour la résistance du bouclier et des projecteurs lors d'un choc et produit en outre un espace irrégulier inesthétique entre le bouclier et les projecteurs.

Un autre dispositif consiste à réaliser des faces avant en bloc prémonté comportant le bouclier et les projecteurs solidaires d'une pièce de référence destinée à être fixée sur la structure avant du véhicule, tel que décrit dans le document FR-2 783 797. Le document FR-2 827 251 décrit également un dispositif de ce genre, dans lequel la pièce de référence presse le bouclier contre la face inférieure du projecteur, sans espace. Ce dispositif permet un montage rapide et simple mais ne peut toutefois être utilisé que pour des véhicules conçus à cet effet et ne peut être adapté aux véhicules ne comportant pas de faces avant prémontées.

Un bloc projecteur selon le preambule de la revendication 1 est connu de EP-A-1232932.

L'invention vise à pallier ces inconvénients en proposant un bloc projecteur pouvant être facilement fixé à un véhicule, sans pour autant faire partie d'une face avant en bloc, et qui procure également un support de bouclier maintenant ce dernier à une distance sensiblement constante du projecteur.

A cet effet, un premier objet de l'invention concerne un bloc projecteur pour véhicule automobile. Selon les caractéristiques de la revendication 1.

Dans un mode de réalisation, les moyens support de bouclier s'étendent de manière continue sur au moins une partie du pourtour du corps du support. Dans un autre mode de réalisation, les moyens support de bouclier sont régulièrement répartis sur une partie du pourtour du corps du support. Cette dernière configuration permet de faire passer entre les moyens de support des équipements du projecteur, tel qu'un gicleur, ou d'autres éléments du véhicule. Ces modes de réalisation permettent d'obtenir un soutien efficace du bouclier au niveau du projecteur.

Avantageusement, les moyens support de bouclier s'étendent le long de et en dessous de la partie visible du bord de la face inférieure du projecteur. Un espace constant entre le bouclier et le projecteur est ainsi assuré au niveau de la partie visible du projecteur, améliorant l'esthétique de l'ensemble.

Dans un mode de réalisation particulier, les moyens support de bouclier présentent au moins une surface d'appui sur laquelle repose le bouclier, qui s'étend sensiblement parallèlement à la face inférieure du projecteur, en dessous de celle-ci.

Dans une variante, les moyens support de bouclier présentent au moins une patte de support reliée rigidement au corps du support et dont la partie supérieure forme ladite au moins une surface d'appui.

Notamment, ladite au moins une surface d'appui de la patte de support peut être une surface sensiblement plane dont la plus grande dimension s'étend le long du pourtour du corps du support. Un support très stable du bouclier est alors obtenu.

Dans une autre variante, les moyens support de bouclier présentent une pluralité de pattes de support dont les surfaces d'appui respectives sont des surfaces sensiblement planes dont la plus grande dimension s'étend sensiblement perpendiculairement au pourtour du corps du support.

Dans une variante, on peut combiner les deux types de surfaces d'appui qui viennent d'être décrites en fonction de l'encombrement.

Selon l'invention, le corps du support est pourvu de moyens de positionnement et de fixation du projecteur, et de moyens de fixation sur le véhicule. Les moyens de positionnement et de fixation du projecteur facilitent la mise en place du projecteur sur son support, ce qui permet de réduire le temps de montage et de limiter les réglages.

En particulier, les moyens de positionnement et de fixation comprennent des languettes de positionnement aptes à être insérées dans des parties correspondantes de la face inférieure du projecteur et des languettes de fixation aptes à être fixées rigidement sur la face inférieure du projecteur au niveau de sa partie arrière. Il suffit ainsi de désolidariser les languettes de fixation pour déplacer le projecteur par rapport à son support puis pour le retirer totalement du support. Ce déplacement peut être utilisé avantageusement lors du changement des ampoules du projecteur, pour faciliter l'accès à ces dernières sans démonter entièrement le projecteur de son support.

Un autre objet de l'invention concerne un véhicule comportant un bouclier présentant un bord supérieur sensiblement horizontal solidaire d'une paroi sensiblement verticale et un bloc projecteur selon l'invention.

Avantageusement, les moyens de fixation du support de projecteur sur le véhicule comprennent au moins une patte de fixation sur une structure fixe supérieure du véhicule et au moins une patte de fixation sur une structure fixe inférieure du véhicule. Cette fixation en deux points de la structure assure une bonne stabilité au support de projecteur.

Avantageusement, le véhicule comportant un longeron formant une structure fixe inférieure, ladite au moins une patte de fixation est reliée au longeron par une pièce en forme de L renversé, dont la petite aile est solidarisée à ladite au moins une patte de fixation et la grande aile est solidarisée au longeron.

Dans une variante, un élément enjoliveur est fixé sur le bord supérieur du bouclier de façon à obturer l'espace entre le bouclier et le projecteur dans la direction verticale, afin d'améliorer l'esthétique de l'avant du véhicule.

Selon l'invention, les moyens support de bouclier sont conformés de manière à être à une distance prédéterminée de la paroi avant du bouclier suivant une direction sensiblement perpendiculaire au pourtour du corps du support dans un plan sensiblement horizontal, et de manière à être à une distance prédéterminée du projecteur suivant la même direction de sorte que le bord du bouclier soit distant du projecteur. Cette configuration présente plusieurs avantages. Les espaces entre la paroi avant du bouclier et le support d'une part, et entre le bord du bouclier et le projecteur d'autre part permettent au bouclier de se déplacer lors de faibles chocs sans pour autant endommager le support et/ou le projecteur. L'espace entre le bord du bouclier et le projecteur joue le rôle d'un espace de débattement du projecteur : ce dernier peut ainsi être avancé jusqu'aux moyens support de bouclier, libérant ainsi de la place sur sa face arrière, par exemple, pour changer les ampoules ou d'autres éléments.

L'invention est maintenant décrite en référence aux dessins annexés, non limitatifs, dans lesquels :
- la figure 1 est une vue en perspective éclatée d'un bloc projecteur selon l'invention et d'un bouclier de véhicule ;
- la figure 2 est une vue en perspective de la face supérieure d'un support de projecteur ;
- la figure 3 est une vue en coupe selon la ligne A-A des éléments de la figure 1, sans le bouclier, en position montée ;
- la figure 4 est une vue en coupe selon la ligne B-B des éléments de la figure 1 en position montée ;
- la figure 5 est une représentation similaire à la figure 2 d'un autre mode de réalisation d'un support de projecteur.

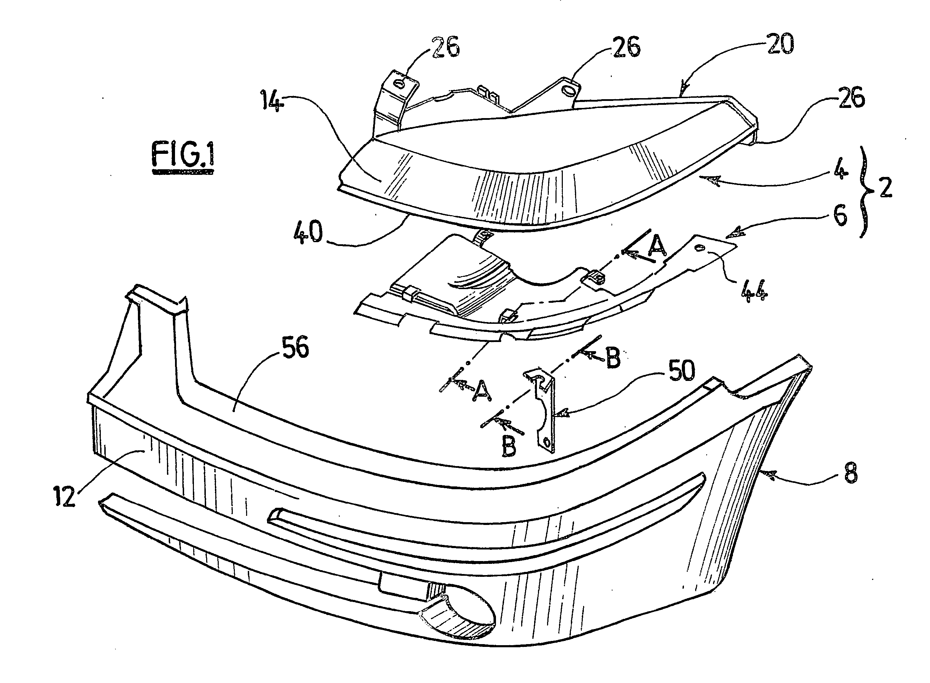

La figure 1 représente un bloc projecteur 2 comportant un projecteur lumineux 4 et un support de projecteur 6. Ce bloc projecteur 2 est destiné à l'avant d'un véhicule automobile dont seul le bouclier 8 avant est représenté. Ce dernier est par exemple fixé de manière connue à la caisse du véhicule par ses extrémités latérales et à la traverse avant par sa partie médiane.

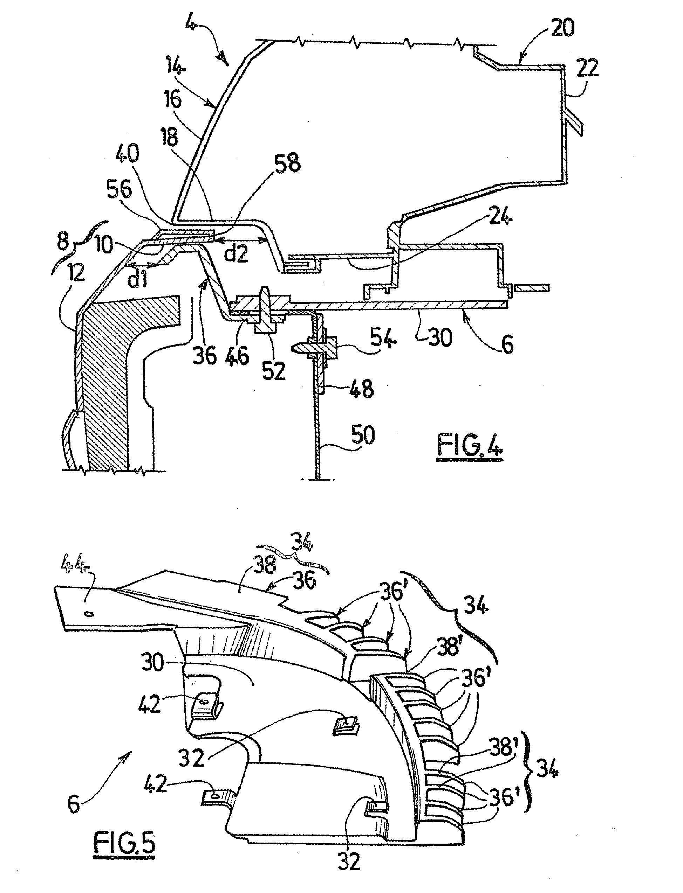

Le bouclier 8 présente un bord supérieur 10 sensiblement horizontal, visible sur la figure 4, solidaire d'une paroi 12 sensiblement verticale.

Le projecteur 4 comprend une glace externe 14 comprenant une paroi avant 16 et un bord inférieur 18 essentiellement horizontal en position montée (figure 4). La glace externe 14 est hermétiquement solidaire d'un boîtier 20 comportant un fond arrière 22 et une base 24 sensiblement horizontale. Le bord inférieur est situé dans un plan situé au-dessus de la base 24.

Dans la suite du texte, on appelle "face inférieure du projecteur" le bord inférieur 18 de la glace 14 et la base 24 du boîtier 20. Dans des variantes non représentées, la face inférieure du projecteur peut être formée uniquement de la base 24 du boîtier, par exemple lorsque la glace 14 ne présente pas de bord inférieur 18.

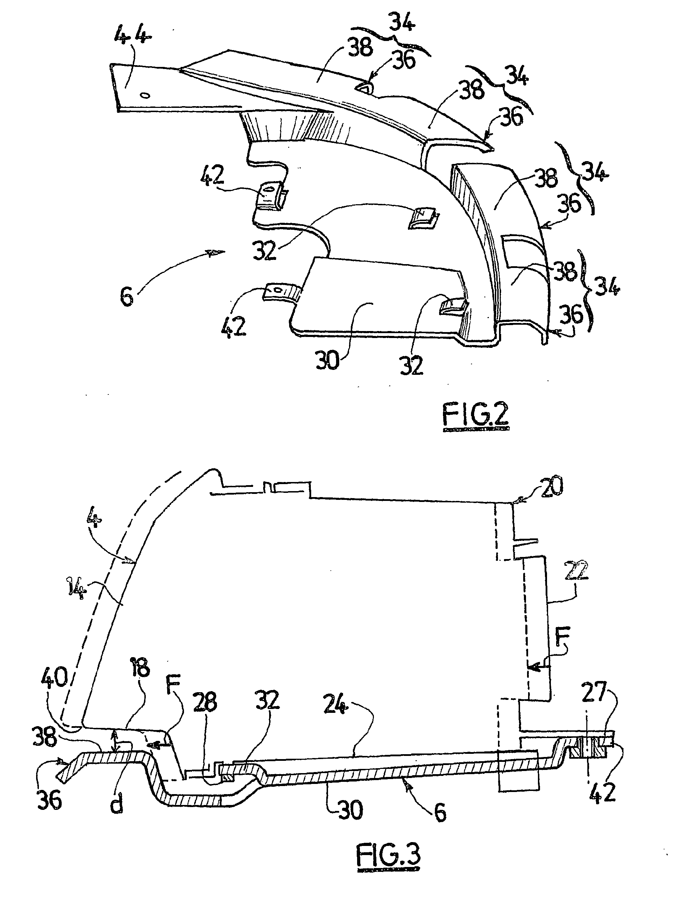

Le projecteur 4 comprend au moins deux pattes de fixation 26 sur des parties fixes du véhicule. Dans le mode de réalisation représenté, trois pattes de fixation 26 solidaires du boîtier 20 sont prévues. De manière similaire, le boîtier 20 présente également au moins deux pattes de fixation 27 sur le support de projecteur 6, situées à proximité de sa base 24 (figure 3). Ces pattes 26, 27 comprennent un orifice permettant leur fixation par vis ou analogues au véhicule ou au support. Les pattes 26 sont par exemple fixées sur la traverse avant supérieure et sur la caisse du véhicule (non représentées).

La base 24 du projecteur présente également des moyens de positionnement par rapport au support de projecteur 6. Ces moyens de positionnement consistent en au moins deux logements 28, dont un seul est visible sur la figure 4. Ils sont orientés dans la même direction, par exemple suivant la direction longitudinale du véhicule, et sont aptes à coopérer avec des languettes correspondantes disposées sur le support 6.

Le support de projecteur 6 est décrit en référence à la figure 2. Il comprend un corps 30 apte à recevoir et supporter au moins en partie la face inférieure du projecteur. Dans l'exemple, le corps 30 supporte la base 24 du projecteur. Sa forme est donc sensiblement complémentaire de la forme de la base 24. Deux languettes 32, découpées dans l'épaisseur du corps 30 et saillant au dessus de sa surface, forment des moyens de positionnement du projecteur. Elles sont conçues de manière à pouvoir être engagées dans les logements 28 de la base 24 du projecteur (figure 3). De préférence, les languettes 32 sont engagées dans les logements 28 suivant la direction longitudinale du véhicule, vers l'avant de ce dernier.

Le corps 30 est pourvu de moyens support de bouclier 34 destinés à supporter au moins partiellement le bord supérieur 10 du bouclier.

Dans le mode de réalisation représenté sur les figures 2 à 4, ces moyens comportent des pattes 36, rigidement solidaires du pourtour du corps 30, et présentant chacune une surface d'appui supérieure 38 sensiblement plane. Les pattes 36 sont conformées de manière à ce que, lorsque le projecteur est en place sur le support 6, les surfaces d'appui 38 s'étendent à une distance d sensiblement constante en dessous de la face inférieure du projecteur suivant une direction sensiblement verticale (figure 3). Ces surfaces d'appui 38 servent de support au bord 10 du bouclier, tel que représenté sur la figure 4. Dans ce mode de réalisation, la plus grande dimension de ces surfaces d'appui 38 s'étend le long du pourtour du corps 30.

Afin d'assurer un maintien correct du bouclier, les pattes 36 s'étendent de préférence le long, et en dessous, de la partie visible 40 du bord de la face inférieure du projecteur 4. Elles sont de préférence réparties régulièrement le long de cette partie 40, mais peuvent former une seule patte continue le long de celle-ci.

Le corps 30 comprend par ailleurs des moyens de fixation du projecteur, tel que par exemple des pattes de fixation 42 pourvues d'orifices disposées sur la partie arrière du corps 30 (figure 2). Ces pattes 42 sont fixées aux pattes 27 du projecteur, par vissage ou analogue (figure 3).

Enfin, le corps 30 présente également des moyens de fixation sur des parties fixes du véhicule. Ces moyens comprennent, par exemple, au moins une patte 44 sensiblement horizontale ou verticale pourvue d'un orifice, et fixée sur la partie latérale supérieure de la caisse du véhicule (non représentée). Ils comprennent également au moins une patte 46 située sur le dessous du corps 30, parallèlement à ce dernier (figure 4), à distance de la patte 44.

Cette patte 46 est fixée sur une partie fixe inférieure du véhicule. Dans l'exemple représenté, la patte 46 est fixée sur un longeron 48 du véhicule par l'intermédiaire d'une pièce 50 en forme de L renversé. La petite aile de la pièce 50 est ainsi insérée entre la patte 46 et le corps 30 et fixée à ceux-ci au moyen d'une vis 52 ou analogue, tandis que la grande aile de la pièce 50 est fixée au longeron 48 au moyen d'une vis 54 ou analogue.

Les pattes 44 et 46 assurent ainsi une bonne fixation du support de projecteur 6 par rapport au véhicule, et limitent la transmission d'efforts au projecteur.

Dans le mode de réalisation représenté sur la figure 5, les moyens support de bouclier 34 comprennent une patte 36, telle que décrite en référence à la figure 2, et des pattes 36' qui s'étendent suivant une direction sensiblement verticale. Les surfaces d'appui 38' du bouclier sont alors formées par la tranche supérieure des pattes 36' et sont des surfaces sensiblement planes dont la plus grande dimension s'étend perpendiculairement au pourtour du corps. Pour améliorer la rigidité, certaines pattes 36' peuvent éventuellement être reliés entre elles par des ponts de matière (non représentés).

La réalisation de pattes 36 ou 36' espacées permet de ménager des espaces pour laisser passer des équipements du véhicule.

Par exemple, un élément enjoliveur 56 peut être fixé sur le bord supérieur 10 du bouclier (figures 1 et 4). Des vis ou clips de fixation verticaux de cet enjoliveur sur le bouclier sont alors disposés entre les pattes 36 ou 36'. Un tel élément enjoliveur permet d'obturer au moins partiellement la distance d entre le bouclier et le projecteur, à des fins esthétiques.

Les moyens support de bouclier 34 sont configurés de manière à ce que, lorsque le projecteur est fixé sur le support 6 et que le bouclier 8 repose sur les pattes 36, 36', des espaces d1 et d2 soient ménagés respectivement, entre la paroi avant 12 du bouclier et la partie la plus en avant des pattes 36, 36', et entre l'extrémité 58 du bord supérieur du bouclier et le projecteur, suivant une direction sensiblement perpendiculaire au pourtour du corps du support (figure 4). Ces espaces permettent, lors de faibles chocs, d'éviter que le bouclier n'endommage le support et le projecteur. Ils sont par exemple choisis pour supporter des chocs de l'ordre de 4 Km/h, et peuvent, par exemple, être d'environ 15 mm.

Par ailleurs, l'existence d'un espace d2 permet, une fois que les pattes de fixation 27 et 26 du projecteur ont été désolidarisées, de déplacer de la distance d2 le projecteur 4 suivant la direction des languettes 32 vers l'avant du véhicule, tel que représenté par les flèches F sur la figure 3. La nouvelle position du projecteur 4, représentée en pointillés sur cette figure, permet de libérer un espace du côté du fond 22 du boîtier du projecteur, et d'accéder plus facilement soit au projecteur, soit à d'autres éléments du véhicule disposés derrière le projecteur.

Le montage du bloc projecteur et du bouclier est réalisé de la manière suivante.

Le support de projecteur 6 est d'abord fixé au véhicule au moyen des pattes de fixations 44 et 46. L'écartement entre ces dernières permet d'assurer une fixation très stable du support. Le bouclier 8 est ensuite mis en place, son bord supérieur 10 reposant sur les moyens support de bouclier 34 du support 6. Eventuellement, un élément enjoliveur 56 peut être fixé sur le bord supérieur 10. Le projecteur 4 est ensuite placé sur le support de projecteur 6 de manière à ce que les logements 28 de la base du projecteur soient alignés avec les languettes 32 du support 6. Ces dernières sont alors engagées dans les logements 28. Le projecteur 4 est enfin fixé sur le support au moyen des pattes de fixation 27 et sur le véhicule au moyen des pattes de fixation 26.

Il est alors facile et rapide de démonter et remonter rapidement le projecteur grâce aux moyens de positionnement et au faible nombre de pattes de fixation. Il n'est plus nécessaire d'effectuer des réglages à chaque opération de manipulation du projecteur, dès lors que le support est mis en place.

Bien entendu, on peut prévoir d'autres modes de réalisation des moyens de positionnement du support par rapport au projecteur. Par exemple, les pattes peuvent être disposées sur le projecteur. Le nombre et la position des diverses pattes de fixation peuvent également varier en fonction de la structure de chaque véhicule.

## Revendications

1. Bloc projecteur (2) pour véhicule automobile comportant un projecteur (4) présentant une face inférieure et un support de projecteur (6), ledit véhicule comportant un bouclier (8) présentant un bord supérieur (10) sensiblement horizontal avec une extrémité (58) et solidaire d'une paroi avant (12) sensiblement verticale, dans lequel,
le support de projecteur (6) comprend un corps (30) recevant et supportant au moins en comprend face inférieure du projecteur, ledit corps étant pourvu de moyens support de bouclier (34) aptes à supporter au moins partiellement ledit bord supérieur du bouclier (10) sous la face inférieure du projecteur, à une distance sensiblement constante (d) de ladite face inférieure suivant une direction sensiblement verticale, ledit bloc projecteur (2) comportant des moyens de fixation (44, 46, 26) au véhicule, et dans lequel,
le corps du support (30) est pourvu de moyens de positionnement (32) et de fixation (42) du projecteur, et de moyens de fixation (44, 46) sur le véhicule,
**caractérisé en ce que** les moyens support de bouclier (34) sont conformés de manière à être à une distance prédéterminée (d1) de la paroi avant (12) du bouclier suivant une direction sensiblement perpendiculaire au pourtour du corps du support (30) dans un plan sensiblement horizontal, et de manière à être à une distance prédéterminée du projecteur suivant la même direction de sorte que l'extrémité (58) du bord supérieur (10) du bouclier soit distant (d2) du projecteur (4), permettant ainsi un déplacement du bouclier et du projecteur.

2. Bloc projecteur selon la revendication 1, **caractérisé en ce que** les moyens support de bouclier (34) s'étendent de manière continue sur au moins une partie du pourtour du corps du support (30).

3. Bloc projecteur selon la revendication 1, **caractérisé en ce que** les moyens support de bouclier (34) sont régulièrement répartis sur une partie du pourtour du corps du support (30).

4. Bloc projecteur selon l'une des revendications 1 à 3, **caractérisé en ce que** les moyens support de bouclier (34) s'étendent le long de et en dessous de la partie visible (40) du bord de la face inférieure du projecteur.

5. Bloc projecteur selon l'une des revendications 1 à 4, **caractérisé en ce que** les moyens support de bouclier (34) présentent au moins une surface d'appui (38, 38') sur laquelle repose le bouclier, qui s'étend sensiblement parallèlement à la face inférieure du projecteur, en dessous de celle-ci.

6. Bloc projecteur selon la revendication 5, **caractérisé en ce que** les moyens support de bouclier (34) présentent au moins une patte de support (36, 36') reliée rigidement au corps du support et dont la partie supérieure forme ladite au moins une surface d'appui (38, 38').

7. Bloc projecteur selon la revendication 6, **caractérisé en ce que** ladite au moins une surface d'appui (38) de la patte de support (36) est une surface sensiblement plane dont la plus grande dimension s'étend le long du pourtour du corps du support.

8. Bloc projecteur selon la revendication 6, **caractérisé en ce que** les moyens support de bouclier (34) présentent une pluralité de pattes de support (36') dont les surfaces d'appui (38') respectives sont des surfaces sensiblement planes dont la plus grande dimension s'étend sensiblement perpendiculairement au pourtour du corps du support.

9. Bloc projecteur selon l'une des revendications 1 à 7 **caractérisé en ce que** les moyens de positionnement et de fixation comprennent des languettes de positionnement (32) aptes à être insérées dans des parties correspondantes (28) de la face inférieure du projecteur et des languettes de fixation (42) aptes à être fixées rigidement sur la face inférieure du projecteur au niveau de sa partie arrière.

10. Véhicule comportant un bouclier (8) présentant un bord supérieur (10) sensiblement horizontal solidaire d'une paroi avant sensiblement verticale (12) et un bloc projecteur (2) selon l'une des revendications 1 à 9.

11. Véhicule selon la revendication 10, **caractérisé en ce que** les moyens de fixation du support de projecteur sur le véhicule comprennent au moins une patte de fixation (44) sur une structure fixe supérieure du véhicule et au moins une patte de fixation (46) sur une structure fixe inférieure du véhicule.

12. Véhicule selon la revendication 11, ledit véhicule comportant un longeron (48) formant une structure fixe inférieure, **caractérisé en ce que** ladite au moins une patte de fixation (46) est reliée au longeron (48) par une pièce (50) en forme de L renversé, dont la petite aile est solidarisée à ladite au moins une patte de fixation (46) et la grande aile est solidarisée au longeron (48).

13. Véhicule selon l'une des revendications 10 à 12, **caractérisé en ce qu'**un élément enjoliveur (56) est fixé sur le bord supérieur (10) du bouclier de façon à obturer l'espace entre le bouclier et le projecteur dans la direction verticale.

## Claims

1. Headlamp unit (2) for a motor vehicle, comprising a headlamp (4) having an underside and a headlamp support (6), the said vehicle comprising a bumper (8) exhibiting a substantially horizontal upper edge (10) with one end (58) and secured to a substantially vertical front wall (12), in which
the headlamp support (6) comprises a body (30) accepting and supporting, at least in part, the underside of the headlamp, the said body being provided with bumper support means (34) able at least partially to support the said upper edge (10) of the bumper under the underside of the headlamp, at a substantially constant distance (d) from the said underside in a substantially vertical direction, the said headlamp unit (2) comprising means (44, 46, 26) of attachment to the vehicle, and in which,
the body (30) of the support is provided with headlamp positioning (32) and attachment (42) means and with means (44, 46) of attachment to the vehicle,
**characterized in that** the bumper support means (34) are shaped in such a way as to lie a predetermined distance (d1) away from the front wall (12) of the bumper in a direction substantially perpendicular to the periphery of the body (30) of the support in a substantially horizontal plane, and in such a way as to lie a predetermined distance away from the headlamp in the same direction so that the end (58) of the upper edge (10) of the bumper is at a distance (d2) from the headlamp (4) thus allowing movement of the bumper and of the headlamp.

2. Headlamp unit according to Claim 1, **characterized in that** the bumper support means (34) extend continuously over at least part of the periphery of the body (30) of the support.

3. Headlamp unit according to Claim 1, **characterized in that** the bumper support means (34) are evenly distributed over part of the periphery of the body (30) of the support.

4. Headlamp unit according to one of Claims 1 to 3, **characterized in that** the bumper support means (34) extend along and under the visible part (40) of the edge of the underside of the headlamp.

5. Headlamp unit according to one of Claims 1 to 4, **characterized in that** the bumper support means (34) have at least one bearing surface (38, 38') against which the bumper rests, which extends substantially parallel to the underside of the headlamp, beneath the latter.

6. Headlamp unit according to Claim 5, **characterized in that** the bumper support means (34) have at least one support tab (36, 36') rigidly connected to the body of the support and the upper part of which forms the said at least one bearing surface (38, 38').

7. Headlamp unit according to Claim 6, **characterized in that** the said at least one bearing surface (38) of the support tab (36) is a substantially planar surface the largest dimension of which extends along the periphery of the body of the support.

8. Headlamp unit according to Claim 6, **characterized in that** the bumper support means (34) have a plurality of support tabs (36') of which the respective bearing surfaces (38') are substantially planar surfaces the largest dimension of which extends substantially perpendicular to the periphery of the body of the support.

9. Headlamp unit according to one of Claims 1 to 7, **characterized in that** the positioning and attachment means comprise positioning tongues (32) able to be inserted in corresponding parts (28) of the underside of the headlamp and attachment tongues (42) able to be rigidly attached to the underside of the headlamp at the rear part thereof.

10. Vehicle comprising a bumper (8) having a substantially horizontal upper edge (10) secured to a substantially vertical front wall (12) and a headlamp unit (2) according to one of Claims 1 to 9.

11. Vehicle according to Claim 10, **characterized in that** the means of attaching the headlamp support to the vehicle comprise at least one attachment tab (44) for attachment to an upper fixed structure of the vehicle and at least one attachment tab (46) for attachment to a lower fixed structure of the vehicle.

12. Vehicle according to Claim 11, the said vehicle comprising a beam (48) forming a lower fixed structure, **characterized in that** the said at least one attachment tab (46) is connected to the beam (48) by an inverted-L-shaped component (50) of which the shorter leg is secured to the said at least one attachment tab (46) and of which the longer leg is secured to the beam (48).

13. Vehicle according to one of Claims 10 to 12, **characterized in that** a trim element (56) is attached to the upper edge (10) of the bumper to conceal the space between the bumper and the headlamp in the vertical direction.

## Patentansprüche

1. Scheinwerfereinheit (2) für ein Kraftfahrzeug, die einen Scheinwerfer (4) mit einer Unterseite und eine Scheinwerferhalterung (6) aufweist, wobei das Fahrzeug einen Stoßfänger (8) aufweist, der einen im Wesentlichen waagrechten oberen Rand (10) mit einem Ende (58) hat, welcher fest mit einer im Wesentlichen senkrechten Vorderwand (12) verbunden ist, wobei
die Scheinwerferhalterung (6) einen Körper (30) enthält, der die Unterseite des Scheinwerfers aufnimmt und zumindest teilweise hält, wobei der Körper mit Stoßfängerhalterungsmitteln (34) versehen ist, die zumindest teilweise den oberen Rand des Stoßfängers (10) unter der Unterseite des Scheinwerfers in einem in einer im Wesentlichen senkrechten Richtung im Wesentlichen konstanten Abstand (d) von der Unterseite halten können, wobei die Scheinwerfereinheit (2) Mittel (44, 46, 26) zur Befestigung am Fahrzeug aufweist, und
wobei
der Körper (30) der Halterung mit Mitteln zum Positionieren (32) und zur Befestigung (42) des Scheinwerfers und mit Mitteln (44, 46) zur Befestigung am Fahrzeug versehen ist,
**dadurch gekennzeichnet, dass** die Mittel (34) zur Halterung des Stoßfängers so gestaltet sind, dass sie sich in einem vorbestimmten Abstand (d1) zur Vorderwand (12) des Stoßfängers in einer Richtung im Wesentlichen lotrecht zum Umriss des Körpers (30) der Halterung in einer im Wesentlichen waagrechten Ebene befinden, und dass sie sich in einem vorbestimmten Abstand zum Scheinwerfer in der gleichen Richtung befinden, so dass das Ende (58) des oberen Rands (10) des Stoßfängers einen Abstand (d2) zum Scheinwerfer (4) hat, wodurch eine Verschiebung des Stoßfängers und des Scheinwerfers erlaubt wird.

2. Scheinwerfereinheit nach Anspruch 1, **dadurch gekennzeichnet, dass** die Stoßfängerhalterungsmittel (34) sich durchgehend über mindestens einen Teil des Umrisses des Körpers (30) der Halterung erstrecken.

3. Scheinwerfereinheit nach Anspruch 1, **dadurch gekennzeichnet, dass** die Stoßfängerhalterungsmittel (34) gleichmäßig über einen Teil des Umrisses des Körpers (30) der Halterung verteilt sind.

4. Scheinwerfereinheit nach einem der Ansprüche 1 bis 3, **dadurch gekennzeichnet, dass** die Stoßfängerhalterungsmittel (34) sich entlang und unter dem sichtbaren Bereich (40) des Rands der Unterseite des Scheinwerfers erstrecken.

5. Scheinwerfereinheit nach einem der Ansprüche 1 bis 4, **dadurch gekennzeichnet, dass** die Stoßfängerhalterungsmittel (34) mindestens eine Auflagefläche (38, 38') haben, auf der der Stoßfänger aufliegt, die sich parallel zur Unterseite des Scheinwerfers unter dieser erstreckt.

6. Scheinwerfereinheit nach Anspruch 5, **dadurch gekennzeichnet, dass** die Stoßfängerhalterungsmittel (34) mindestens eine Stützlasche (36, 36') haben, die steif mit dem Körper der Halterung verbunden ist und deren oberer Bereich die mindestens eine Auflagefläche (38, 38') bildet.

7. Scheinwerfereinheit nach Anspruch 6, **dadurch gekennzeichnet, dass** die mindestens eine Auflagefläche (38) der Stützlasche (36) eine im Wesentlichen ebene Fläche ist, deren größte Abmessung sich entlang des Umrisses des Körpers der Halterung erstreckt.

8. Scheinwerfereinheit nach Anspruch 6, **dadurch gekennzeichnet, dass** die Stoßfängerhalterungsmittel (34) mehrere Stützlaschen (36') haben, deren Auflageflächen (38') im Wesentlichen ebene Flächen sind, deren größte Abmessung sich im Wesentlichen lotrecht zum Umriss des Körpers der Halterung erstreckt.

9. Scheinwerfereinheit nach einem der Ansprüche 1 bis 7, **dadurch gekennzeichnet, dass** die Positionier-und Befestigungsmittel Positionierzungen (32), die in entsprechende Bereiche (28) der Unterseite des Scheinwerfers eingefügt werden können, und Befestigungszungen (42) aufweisen, die starr an der Unterseite des Scheinwerfers in Höhe seines hinteren Bereichs befestigt werden können.

10. Fahrzeug, das einen Stoßfänger (8), der einen im Wesentlichen waagrechten oberen Rand (10) hat, der fest mit einer im Wesentlichen senkrechten Vorderwand (12) verbunden ist, und eine Scheinwerfereinheit (2) nach einem der Ansprüche 1 bis 9 aufweist.

11. Fahrzeug nach Anspruch 10, **dadurch gekennzeichnet, dass** die Mittel zur Befestigung der Scheinwerferhalterung am Fahrzeug mindestens eine Lasche (44) zur Befestigung an einer oberen festen Struktur des Fahrzeugs und mindestens eine Lasche (46) zur Befestigung an einer unteren festen Struktur des Fahrzeugs aufweisen.

12. Fahrzeug nach Anspruch 11, wobei das Fahrzeug einen eine untere feste Struktur bildenden Längsträger (48) aufweist, **dadurch gekennzeichnet, dass** die mindestens eine Befestigungslasche (46) mit dem Längsträger (48) durch ein Bauteil (50) in Form eines umgedrehten L verbunden ist, dessen kleiner Schenkel fest mit der mindestens einen Befestigungslasche (46) und dessen großer Schenkel fest mit dem Längsträger (48) verbunden ist.

13. Fahrzeug nach einem der Ansprüche 10 bis 12, **dadurch gekennzeichnet, dass** ein Zierleistenelement (56) am oberen Rand (10) des Stoßfängers so befestigt ist, dass der Raum zwischen dem Stoßfänger und dem Scheinwerfer in senkrechter Richtung verschlossen wird.
